# DEMANDE DE BREVET EUROPEEN

(11) **EP 4 763 542 A1**
(43) Date de publication de la demande: **24.06.2026**
(21) Numéro de dépôt: 25226224.1
(22) Date de dépôt: 22.12.2025
(51) Int. Cl.: B60C 29/06, B60S 5/04, F16L 37/084, F16L 37/12, F16L 37/40

(54) **ÉLÉMENT FEMELLE DE RACCORD FLUIDIQUE, ET RACCORD FLUIDIQUE ASSOCIÉ**

(30) Priorité: 23.12.2024 FR 2415087
(71) Demandeur: Staubli Faverges, 74210 Faverges-Seythenex (FR)
(72) Inventeur: GOLFIER, Fabrice, 73200 PALLUD (FR); DURIEUX, Christophe, 73200 GILLY SUR ISERE (FR)
(74) Mandataire: Lavoix

(57) **Abrégé**

Cet élément femelle (100) de raccord fluidique (R) est prévu pour être connecté à un embout mâle (10) de type Schrader, avec une partie tubulaire (16) filetée. L'élément femelle (100) comprend un corps principal (110), qui ménage une embouchure distale (112) de réception de l'embout mâle dans une position engagée, et un adaptateur (120), qui est prévu pour être solidarisé à une canalisation et qui est assemblé au corps principal. Un verrou (140), qui est reçu dans un logement (118) ménagé radialement dans le corps principal, ménage une ouverture (145) traversante prévue pour recevoir l'élément mâle en position engagée. Une butée de verrou (170) est guidée dans le corps principal (110) et s'étend dans le logement (118) et dans l'ouverture (145) du verrou, de manière à autoriser les mouvements du verrou entre une position de verrouillage et une position de déverrouillage, tout en empêchant les mouvements au-delà de la position de verrouillage.

## Description

La présente invention concerne un élément femelle de raccord fluidique, ainsi qu'un raccord fluidique comprenant un tel élément femelle.

On s'intéresse ici aux éléments femelles configurés pour être fluidiquement connectés à un embout mâle de type Schrader, aussi appelé « embout Schrader ». Les embouts Schrader, du nom de leur inventeur, sont largement utilisés sur les roues des véhicules automobiles pour permettre le gonflage des pneus et sont par exemple définis dans la norme ISO 3877-2:1997. Un embout Schrader comporte une partie tubulaire filetée avec un passage intérieur qui est obturé au moyen d'une valve, sous l'effet de la pression. Cette valve comporte une épingle qui s'étend vers une embouchure de l'embout et qui est agencée de manière à être repoussée par l'élément femelle lors de la connexion de l'élément femelle à l'embout mâle, permettant ainsi le passage de l'air. Par extension, on appelle aussi « raccord Schrader » un élément femelle prévu pour être connecté à un embout mâle de type Schrader.

FR 2 474 639-A1 divulgue un exemple d'élément femelle pour embout Schrader, cet élément femelle comportant une griffe 5 avec une dent 403 apte à pénétrer dans le filetage extérieur de l'embout mâle. La griffe est montée radialement sur le corps de l'élément femelle et mobile radialement entre une position verrouillée et une position déverrouillée grâce à un levier 6. Cette construction est relativement simple, mais reste relativement fragile et encombrante radialement, la queue du levier étant notamment exposée aux chocs. Les documents US-6 076 544-A, US-1 130 475-A et US-9 249 914-B2 décrivent chacun d'autres exemples connus d'éléments femelle pour embout Schrader.

C'est à ces problèmes qu'entend plus particulièrement remédier l'invention, en proposant un élément femelle pour embout Schrader qui soit à la fois compact et robuste.

À cet effet, l'invention concerne un élément femelle de raccord fluidique, l'élément femelle étant prévu pour être connecté à un embout mâle de type Schrader, l'embout mâle comprenant une partie tubulaire avec un filetage et logeant une valve avec une épingle d'ouverture de la valve, l'élément femelle comprenant :
- un corps principal, qui ménage un premier passage s'étendant selon un axe longitudinal, le corps principal comprenant une portion distale et une portion proximale, qui sont alignées selon l'axe longitudinal, le premier passage débouchant de la portion distale par une embouchure distale, le corps principal étant configuré pour recevoir l'embout mâle dans le premier passage en passant par l'embouchure distale, l'embout mâle étant dans une position engagée par rapport à l'élément femelle, la portion distale ménageant un logement, qui s'étend de l'extérieur du corps principal selon un axe de verrouillage radial à l'axe longitudinal et qui débouche dans le premier passage,
- un adaptateur, qui est traversé par un deuxième passage et qui comprend :
   - une partie proximale, de laquelle débouche le deuxième passage et qui comprend des moyens de solidarisation, qui sont prévus pour la connexion fluidique de l'adaptateur à une canalisation,
   - une partie intermédiaire, qui comprend des moyens d'assemblage, par lesquels l'adaptateur est apte à être assemblé à la portion proximale du corps principal, dans une configuration assemblée de l'élément femelle,
   - une partie distale, qui ménage un poussoir, le poussoir s'étendant, dans le premier passage, depuis la partie intermédiaire en direction de l'embouchure distale lorsque l'élément femelle est en configuration assemblée, le deuxième passage débouchant du poussoir, de sorte que lorsque l'adaptateur est assemblé au corps principal, le premier passage et le deuxième passage forment ensemble un canal interne de l'élément femelle, le poussoir étant apte à repousser l'épingle de l'embout mâle lors de la connexion de l'embout mâle à l'élément femelle,
- un verrou, qui est assemblé à la portion distale et qui comprend :
   - une portion de verrouillage, qui est reçue dans le premier passage et dans laquelle est ménagée une ouverture, qui s'étend selon un axe d'ouverture et qui délimite un anneau de passage de l'embout mâle en position engagée,
   - un relief de retenue, qui s'étend en saillie dans l'ouverture et qui est apte à pénétrer dans le filetage de l'embout mâle,
   - une surface d'actionnement opposée au relief de retenue par rapport à l'axe d'ouverture,
   le verrou étant reçu dans le logement et étant mobile en translation par rapport au corps principal suivant l'axe de verrouillage, entre :
   - une position de verrouillage, dans laquelle, lorsque l'embout mâle est reçu dans l'embouchure distale en position engagée, le relief de retenue pénètre dans le filetage de l'embout mâle de manière à maintenir l'embout mâle en position engagée, et
   - une position de déverrouillage, dans laquelle le relief de retenue libère le filetage de l'embout mâle et ne s'oppose pas au retrait de l'embout mâle du corps principal,
- un organe de rappel, qui est configuré pour ramener le verrou de sa position de déverrouillage vers sa position de verrouillage,
- un joint annulaire, qui est agencé autour du poussoir en appui contre une surface axiale de l'adaptateur, la surface axiale étant orientée vers l'embouchure distale et étant portée par un plan perpendiculaire à l'axe longitudinal, le joint annulaire étant configuré pour coopérer avec la partie tubulaire de l'embout mâle en position engagée de manière à assurer une étanchéité entre l'embout mâle et l'adaptateur,
dans lequel :
- l'élément femelle comprend aussi une butée de verrou, la butée de verrou comprenant :
   - une partie distale annulaire, qui est guidée dans le corps principal et qui s'étend, selon l'axe longitudinal, dans le logement du corps principal et dans l'ouverture du verrou, la partie distale annulaire coopérant avec la portion de verrouillage de manière à autoriser les mouvements du verrou entre la position de verrouillage et la position de déverrouillage, tout en empêchant les mouvements au-delà de la position de verrouillage et,
   - un alésage intérieur, qui entoure le poussoir et qui est prévu pour recevoir la partie tubulaire de l'embout mâle,
- le joint annulaire est placé entre l'alésage intérieur de la butée de verrou et le poussoir.

Grâce à l'invention, l'élément femelle, une fois connecté à l'embout de type Schrader, permet de garantir une bonne étanchéité car l'embout mâle est guidé par l'alésage intérieur de la butée de verrou, tout en étant en appui sur le joint annulaire, dont une surface d'étanchéité est formée par l'alésage intérieur de la butée de verrou.

Selon des aspects avantageux mais non obligatoires de l'invention, un tel élément femelle peut incorporer une ou plusieurs des caractéristiques suivantes prises isolément ou selon toute combinaison techniquement admissible :
- La partie distale annulaire de la butée de verrou s'étend, selon l'axe longitudinal, au-delà de l'axe de verrou,
   alors qu'un diamètre de l'alésage intérieur de la partie distale annulaire est légèrement supérieur à un diamètre externe de la partie tubulaire de l'embout mâle.
- Le verrou ménage une surface d'actionnement, qui est accessible depuis l'extérieur de l'élément femelle et qui est prévue pour qu'un utilisateur déplace le verrou de la position de verrouillage vers la position de déverrouillage, à l'encontre de l'organe de rappel, alors que le logement de verrou communique avec l'extérieur du corps principal par un trou supplémentaire, qui est ménagé au travers du corps principal et qui est situé à l'opposé de la surface d'actionnement par rapport à l'axe principal.
- Le relief de retenue comprend une première dent, qui reproduit une portion de taraudage complémentaire du filetage de la partie tubulaire de l'embout mâle, la première dent s'étendant sur une portion angulaire supérieure à 60° centrée sur l'axe d'ouverture.
- Le relief de retenue comprend, outre la première dent, au moins une deuxième dent, qui est apte à pénétrer dans le filetage de la partie tubulaire de l'embout mâle conjointement à la première dent,
   alors que chaque deuxième dent reproduit une portion de taraudage complémentaire du filetage de la partie tubulaire, s'étend sur une portion angulaire supérieure à 60° centrée sur l'axe d'ouverture.
- L'organe de rappel est situé du côté de la surface d'actionnement par rapport à l'axe longitudinal et agit suivant un axe de rappel, qui est parallèle à l'axe de verrouillage et qui est situé entre l'axe de verrouillage et l'arrière du corps principal.
- Le verrou ménage une surface d'appui primaire, qui s'étend globalement selon un plan orthogonal à l'axe de verrouillage,
   alors que le corps principal ménage une surface d'appui secondaire, qui est située en regard de la surface d'appui primaire,
   et que l'organe de rappel agit entre la surface d'appui primaire du verrou et la surface d'appui secondaire.
- Le verrou ménage une surface d'appui primaire, qui s'étend globalement selon un plan orthogonal à l'axe de verrouillage,
   alors que l'élément femelle comprend un support, qui est reçu dans le logement du corps principal, le support étant traversé par la partie distale annulaire de la butée de verrou,
   que le support ménage une surface d'appui secondaire, qui est située en regard de la surface d'appui primaire,
   et que l'organe de rappel agit entre la surface d'appui primaire du verrou et la surface d'appui secondaire.
- Le verrou ménage une surface d'appui primaire, qui s'étend globalement selon un plan orthogonal à l'axe de verrouillage,
   alors que la butée de verrou ménage une surface d'appui secondaire, qui est située en regard de la surface d'appui primaire,
   et que l'organe de rappel agit entre la surface d'appui primaire du verrou et la surface d'appui secondaire.
- Le verrou comprend un insert, qui est réalisé en métal et qui, lorsque l'élément femelle est en configuration assemblée, est solidaire du reste du verrou et est agencé du côté de l'embouchure distale,
   alors que l'insert ménage un anneau de passage de l'embout mâle, l'anneau de passage formant une portion de l'ouverture du verrou,
   et que l'insert ménage le relief de retenue.
- Le verrou présente une face de butée, qui est orientée vers l'embouchure distale et qui est axialement alignée avec l'alésage intérieur de la butée de verrou lorsque le verrou est en position de verrouillage,
   alors que le verrou et le corps principal sont conçus de telle sorte que lorsque le verrou est dans sa position de verrouillage et que l'embout mâle est déconnecté de l'élément femelle, la face de butée s'oppose à l'introduction de l'embout mâle dans l'ouverture traversante du verrou.

L'invention concerne aussi un raccord fluidique, comprenant :
- un exemplaire de l'élément femelle tel que décrit précédemment, et
- un embout mâle de type Schrader, l'embout mâle comprenant une partie tubulaire avec un filetage et logeant une valve avec une épingle d'ouverture de la valve,
dans lequel l'embout mâle est reçu en position engagée dans le canal interne de l'élément femelle.

L'invention sera mieux comprise, et d'autres avantages de celle-ci apparaîtront plus clairement à la lumière de la description qui va suivre, de plusieurs modes de réalisation d'un élément femelle et d'un raccord fluidique, conformes à son principe, donnée uniquement à titre d'exemple et faite en référence aux dessins annexés, dans lesquels :
- [Fig 1] la figure 1 est une coupe longitudinale d'un raccord fluidique conforme à un premier mode de réalisation de l'invention et représentée dans une configuration désaccouplée, le raccord fluidique comprenant un élément femelle, lui-aussi conforme à l'invention ;
- [Fig 2] la figure 2 est une vue en perspective éclatée de l'élément femelle de la figure 1 ;
- [Fig 3] la figure 3 est une coupe longitudinale du raccord fluidique de la figure 1, représenté dans une configuration engagée ;
- [Fig 4] la figure 4 est une coupe longitudinale du raccord fluidique de la figure 1 en configuration engagée, selon un plan de coupe IV-IV à la figure 3 ;
- [Fig 5] la figure 5 est une coupe brisée du raccord fluidique de la figure 3, selon un plan V-V repéré à la figure 3 ;
- [Fig 6] la figure 6 est une coupe longitudinale d'un raccord fluidique conforme à un deuxième mode de réalisation de l'invention et représentée dans la configuration engagée, le raccord fluidique comprenant un élément femelle, lui-aussi conforme à l'invention ;
- [Fig 7] la figure 7 est une coupe longitudinale du raccord fluidique de la figure 6, selon un plan de coupe VII-VII à la figure 6 ;
- [Fig 8] la figure 8 est une vue en perspective éclatée de l'élément femelle de la figure 6 ;
- [Fig 9] la figure 9 représente respectivement, sur deux inserts a) et b), une coupe longitudinale d'un élément femelle appartenant à un raccord fluidique conforme à un troisième mode de réalisation de l'invention, et une coupe brisée de l'élément femelle de l'insert a), selon un plan IX-IX ;
- [Fig 10] la figure 10 est une vue en perspective éclatée de l'élément femelle de la figure 9 ;
- [Fig 11] la figure 11 représente respectivement, sur deux inserts a) et b), une coupe longitudinale d'un élément femelle appartenant à un raccord fluidique conforme à un quatrième mode de réalisation de l'invention, et une coupe brisée de l'élément femelle de l'insert a), selon un plan XI-XI
- [Fig 12] la figure 12 est une vue en perspective éclatée de l'élément femelle de la figure 11, et
- [Fig 13] la figure 13 est une coupe longitudinale d'un élément femelle appartenant à un raccord fluidique conforme à un cinquième mode de réalisation de l'invention.

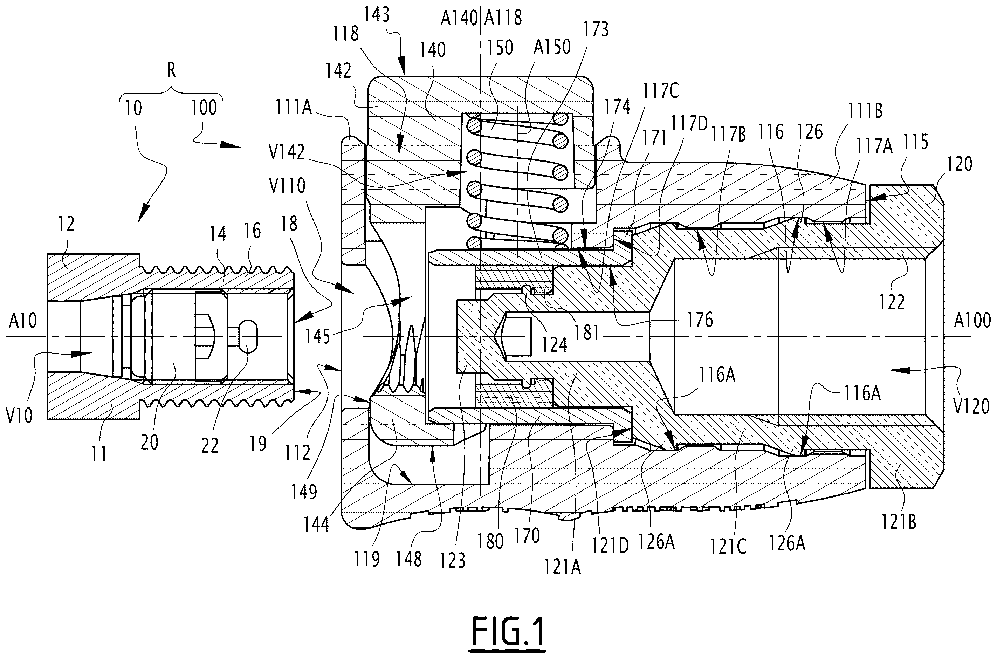

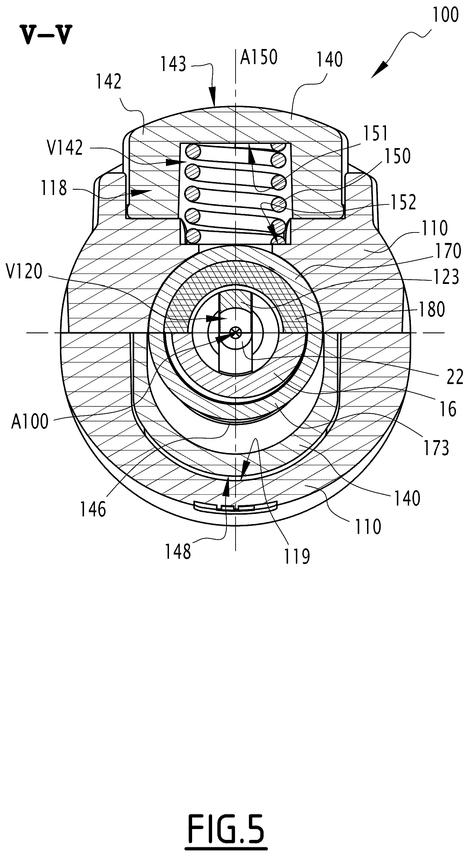

Un raccord fluidique R, conforme à un premier mode de réalisation de l'invention, est décrit en référence aux figures 1 à 5. Le raccord fluidique R comprend un embout mâle 10, qui est situé sur la gauche de la figure 1, et un élément femelle 100, situé sur la droite de la figure 1. La description qui suit est faite en relation aux divers éléments du raccord fluidique R tels que représentés sur les figures, sachant qu'il peut en être autrement dans la réalité.

Le raccord fluidique R est représenté dans une configuration déconnectée à la figure 1, l'embout mâle 10 étant situé en regard de l'élément femelle 100. Dans la configuration déconnectée, pour chacun des éléments choisis parmi l'élément femelle 100 et l'embout mâle 10, un côté distal - ou côté avant - de cet élément est le côté le plus proche de l'autre élément, tandis qu'un côté proximal - ou côté arrière - de cet élément est le côté le plus éloigné de l'autre élément. Ainsi, sur la figure 1 le côté distal de l'embout mâle 10 est situé sur la droite, en regard de l'élément femelle 100, tandis que le côté proximal de l'embout mâle 10 est situé sur la gauche. Symétriquement, sur la figure 1 le côté distal de l'élément femelle 100 est situé sur la gauche, en regard de l'embout mâle 10, tandis que le côté proximal de l'élément femelle 100 est situé sur la droite.

L'embout mâle 10, qui est aussi appelé simplement embout, voire parfois « about », comprend un corps mâle 11 qui présente une forme tubulaire creuse et qui ménage un passage interne V10 s'étendant le long d'un axe principal A10. Le corps mâle 11 comprend une partie proximale 12, par laquelle débouche le passage interne V10 et qui est généralement configurée pour être solidarisé avec une chambre à air, voire directement avec une jante dans une configuration sans chambre à air dite *« tubeless »* en anglais. La chambre à air ou la jante ne sont pas représentées. Le corps mâle 11 comprend une partie distale 14, qui présente, d'un côté externe opposé au passage interne V10, une partie tubulaire 16 filetée. Le passage interne V10 débouche de la partie distale 14 par une embouchure distale 18. La partie distale 14 présente une face d'extrémité 19, qui délimite l'embouchure distale 18. La face d'extrémité 19 présente ici une forme d'anneau et est géométriquement portée par un plan orthogonal à l'axe principal A10. La face d'extrémité 19 est donc une face axiale.

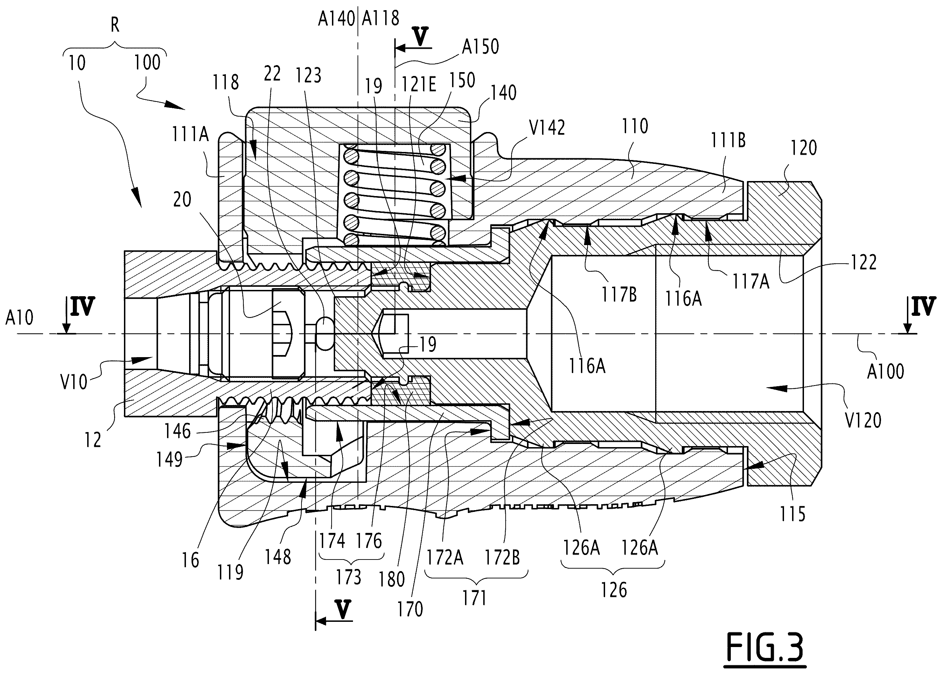

La partie distale 14 de l'embout mâle 10 est prévue pour être reçue dans l'élément femelle 100, comme représenté à la figure 3, l'embout mâle 10 étant alors dans une position engagée par rapport à l'élément femelle 100.

L'embout mâle 10 comprend aussi une valve 20, qui est reçue dans le passage interne V10. La valve 20 est mobile en translation par rapport au corps mâle 11 entre une position fermée, dans laquelle la valve 20 obstrue le passage interne V10 de manière étanche, et une position ouverte, dans laquelle la valve 20 permet la circulation de l'air dans le passage interne V10. Dans la position fermée, la valve 20 est plus proche de l'ouverture distale 18 que dans la position ouverte. Les positions ouverte et fermée sont des positions longitudinales le long de l'axe principal A10. Lorsque la partie proximale 12 est fluidiquement connectée à un élément sous pression, la pression de l'air tend à repousser la valve 20 vers la position fermée.

La valve 20 comprend une tige, appelée épingle 22 - ou *« pin »* en anglais -, qui s'étend depuis le reste de la valve 20 vers l'embouchure distale 18. L'épingle 22 présente ici une extrémité arrondie. Lorsque l'épingle 22 est déplacée vers le côté proximal de l'embout mâle 10, autrement dit vers l'arrière de l'embout mâle 10, l'épingle 22 entraine la valve 20 de la position fermée vers la position ouverte, autorisant la circulation de l'air au travers du passage interne V10.

On décrit à présent l'élément femelle 100. L'élément femelle 100 s'étend globalement selon un axe longitudinal A100 et ménage un canal interne V100. Lorsque le raccord fluidique R est en configuration connectée, le canal interne V100 de l'élément femelle 100 est en communication fluidique avec le passage interne V10 de l'embout mâle 10, l'axe principal A10 étant aligné avec l'axe longitudinal A100.

L'élément femelle 100 comprend un corps principal 110, qui est traversé par un premier passage V110, et un adaptateur 120, qui est traversé par un deuxième passage V120 et qui est assemblé au corps principal 110 dans une configuration assemblée de l'élément femelle 100, de sorte que le deuxième passage V120 est en communication avec le premier passage V110, le premier passage V110 et le deuxième passage V120 formant ensemble le canal interne V100 de l'élément femelle 100. Autrement dit, le premier passage V110 et le deuxième passage V120 forment chacun une portion du canal interne V100. Le premier passage V110 et le deuxième passage V120 s'étendent chacun selon l'axe longitudinal A100.

L'adaptateur 120 comprend :
- une partie distale 121A, de laquelle débouche le deuxième passage V120 et qui ménage un poussoir 123 apte à repousser l'épingle 22 de l'embout mâle 10 en position engagée.
- Une partie proximale 121B, de laquelle débouche le deuxième passage V120 et qui comporte des moyens de solidarisation 122 avec une canalisation. La canalisation n'est pas représentée. Autrement dit, l'adaptateur 120 est apte à être fluidiquement connecté à une canalisation, de sorte que le deuxième passage V120 est en communication fluidique avec la canalisation.
- Une partie intermédiaire 121C, qui est intercalée entre la partie distale 121A et la partie proximale 121B, la partie intermédiaire 121C délimitant radialement le deuxième passage V120 et comprenant des moyens d'assemblage 126, qui sont prévus pour l'assemblage de l'adaptateur 120 avec le corps principal 110.

Dans l'exemple illustré, l'adaptateur 120 ménage une face distale 121D, qui relie, d'un côté externe de l'adaptateur, la partie intermédiaire 121C à la partie distale 121A. La face distale 121D est une face axiale, qui est géométriquement portée par un plan transversal, c'est-à-dire un plan orthogonal à l'axe longitudinal A100. La face distale 121D est orientée vers l'avant de l'adaptateur 120, c'est-à-dire vers le côté distal de l'adaptateur 120.

La partie distale 121A ménage aussi une surface axiale 121E, qui est ici située entre la face distale 121D et le poussoir 123. La surface axiale 121 E est orientée vers l'embouchure distale 112 et est portée par un plan perpendiculaire à l'axe longitudinal A100. Ainsi la surface axiale 121E est située en arrière du poussoir 123, en particulier en arrière de l'endroit ou débouche le deuxième passage V120.

Dans l'exemple non limitatif illustré, les moyens de solidarisation 122 à la canalisation sont formés par un alésage taraudé. En variante non illustrée, les moyens de solidarisation présentent une forme différente, par exemple une queue de sapin destinée à recevoir un tuyau souple maintenu par un collier de serrage, etc.

Dans l'exemple non limitatif illustré, les moyens d'assemblage 126 comprennent au moins une collerette 126A, de préférence deux collerettes 126A, qui sont ménagées en saillie sur un côté externe de la partie intermédiaire 121C. Les deux collerettes 126A sont ici ménagées à distance l'une de l'autre selon l'axe longitudinal A100. Les deux collerettes 126A présentent ici une face conique, qui diverge vers l'arrière de l'adaptateur 120, et une face d'arrêt, qui est portée par un plan orthogonal à l'axe longitudinal A100 et qui est orientée vers l'arrière de l'adaptateur 120.

Le corps principal 110 comprend une portion distale 111A et une portion proximale 111B, qui sont alignées selon l'axe longitudinal A100. Le premier passage V110 débouche de la portion distale 111A par une embouchure distale 112. Le corps principal 110 est configuré pour recevoir l'embout mâle 10 dans le premier passage V110 en passant par l'embouchure distale 112. L'embout mâle 10 est alors dans la position engagée par rapport à l'élément femelle 100.

La portion proximale 111B du corps principal 110 comporte un alésage 114, qui est configuré pour recevoir la partie distale 121A et la partie intermédiaire 121C de l'adaptateur 120 lorsque l'élément femelle 100 est dans la configuration assemblée.

Le premier passage V110 est ainsi délimité radialement par l'alésage 114. La portion proximale 111B présente ici une surface d'extrémité 115, qui est une surface axiale, c'est-à-dire une surface portée par un plan orthogonal à l'axe longitudinal A100. La portion proximale 111B comprend un côté interne, qui est orienté vers l'axe longitudinal A100, et un côté externe, qui est orienté à l'opposé du côté interne. La portion proximale 111B comprend des moyens d'assemblage complémentaires 116, qui sont prévus pour l'assemblage de l'adaptateur 120 au corps principal 110. Plus précisément, les moyens d'assemblage 126 de l'adaptateur 120 sont prévus pour coopérer, notamment par complémentarité de formes, avec les moyens d'assemblage complémentaires 116, pour l'assemblage de l'adaptateur 120 au corps principal 110.

Les moyens d'assemblage complémentaires 116 comprennent au moins une rainure interne 116A, de préférences deux rainures internes 116A, qui sont ménagées en creux dans l'alésage 114. Chaque rainure interne 116A est globalement portée par un plan orthogonal à l'axe longitudinal A100, autrement dit chaque rainure interne 116A est une rainure radiale à l'axe longitudinal A100. Chaque rainure interne 116A s'étend sur 360° autour de l'axe longitudinal A100 et forme donc une rainure circonférentielle interne. Chaque rainure interne 116A est prévue pour recevoir une collerette 126A respective. Le corps principal 110 est ici réalisé en un matériau polymère synthétique, de préférence fabriqué par injection à chaud. De préférence, l'adaptateur 120 est réalisé en métal.

De préférence, l'alésage 114 de la portion proximale 111B comprend, du côté interne et en se déplaçant de la surface d'extrémité 115 vers l'embouchure distale 112 :
- une première portion cylindrique 117A, qui présente un premier diamètre interne et qui est destinée à recevoir la partie intermédiaire 121C de l'adaptateur 120,
- une deuxième portion cylindrique 117B, qui présente un deuxième diamètre interne, le deuxième diamètre interne étant inférieur ou égal au premier diamètre interne,
- une troisième portion cylindrique 117C, qui présente un troisième diamètre interne, le troisième diamètre interne étant inférieur au deuxième diamètre interne,
- une paroi de butée 117D, qui s'étend dans un plan perpendiculaire à l'axe longitudinal A100 entre la deuxième portion cylindrique 117B et la troisième portion cylindrique 117C. Autrement dit, la paroi de butée 117D est une paroi axiale. La paroi de butée 117D est orientée vers l'arrière du corps principal 110, autrement dit vers le côté proximal du corps principal 110. La paroi de butée 117D du corps principal 110 est avantageusement située en regard de la face distale 121D de l'adaptateur 120.

Dans l'exemple illustré, une des deux rainures internes 116A est ménagée dans la première portion cylindrique 117A, l'autre des deux rainures internes 116A étant ménagée dans la deuxième portion cylindrique 117B.

L'élément femelle 100 comprend aussi un verrou 140, qui est prévu pour maintenir l'embout mâle 10 en position engagée. Le verrou 140 est ici réalisé en un matériau polymère synthétique, de préférence fabriqué par injection à chaud. Le verrou 140 est assemblé à la portion distale 111A du corps principal 110, le verrou 140 étant mobile entre :
- une position de verrouillage, dans laquelle, lorsque l'embout mâle 10 est reçu dans l'embouchure distale 112 en position engagée, le verrou 140 coopère avec le filetage de la partie tubulaire 16, de manière à maintenir l'embout mâle 10 en position engagée, et
- une position de déverrouillage, dans laquelle le verrou 140 ne coopère pas avec le filetage de la partie tubulaire 16 et ne s'oppose pas au retrait de l'embout mâle 10 du corps principal 110, comme illustré à la figure 3.

L'élément femelle 100 comprend aussi un organe de rappel 150, qui est configuré pour ramener le verrou 140 de sa position de déverrouillage vers sa position de verrouillage. L'organe de rappel 150 est ici un ressort de compression, qui agit entre le verrou 140 et le reste de l'élément femelle 100. Plus précisément, l'organe de rappel 150 agit entre une surface d'appui primaire 151, qui est ménagée sur le verrou 140, et une surface d'appui secondaire 152, qui est ménagée sur le reste de l'élément femelle 100 et qui est située en regard de la surface d'appui primaire 151.

Dans l'exemple illustré, le verrou 140 est partiellement reçu dans le premier passage V110. Le corps principal 110 présente à cet effet un logement 118, qui s'étend selon un axe de verrouillage A118, qui est ici un axe radial à l'axe longitudinal A100, de la surface extérieure du corps principal 110 à un fond 119. Le premier passage V110 débouche du corps principal par le logement 118. Dans le premier mode de réalisation de l'invention, le logement 118 est de préférence borgne, le logement 118 présentant un fond 119.

Dans l'exemple illustré, le verrou 140 comprend une portion d'actionnement 142, qui ménage une surface d'actionnement 143, la surface d'actionnement étant une surface accessible depuis l'extérieur de l'élément femelle 100 et étant prévue pour qu'un utilisateur puisse déplacer le verrou 140 de la position de verrouillage vers la position de déverrouillage, à l'encontre de l'organe de rappel 150. La surface d'actionnement 143 présente ici une normale globalement perpendiculaire à l'axe longitudinal A100. Autrement dit, la surface d'actionnement 143 est une surface radiale, orientée de manière centrifuge à l'axe longitudinal A100. La portion d'actionnement 142 présente ici une forme globalement cylindrique à section circulaire, et s'étend selon un axe de verrou A140, qui est parallèle à l'axe de verrouillage A118. Dans l'exemple décrit, le verrou 140 a une forme cylindrique à section circulaire, et l'axe de verrou A140 est confondu avec l'axe du cylindre contenant le verrou 140. En alternative non représentée, le verrou présente une section non circulaire dans un plan perpendiculaire à l'axe de verrouillage A118. L'axe de verrou A140 passe alors par un barycentre de la section du verrou 140.

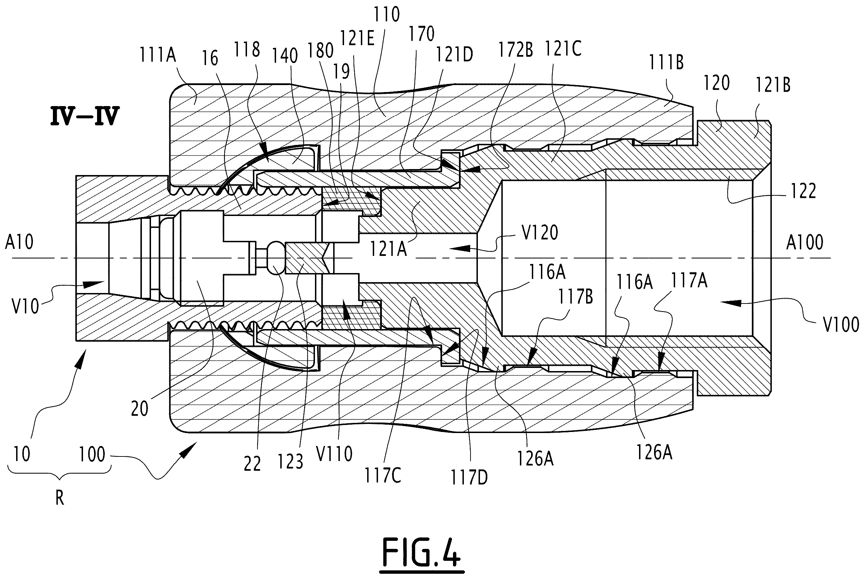

Le verrou 140 comprend aussi une portion de verrouillage 144, qui présente une forme globalement cylindrique, s'étendant selon l'axe de verrou A140, avec de préférence une section non circulaire. Dans l'exemple illustré, la portion de verrouillage 144 présente une section en portion de cercle, en particulier en demi-cercle, comme illustré en coupe à la figure 4. Lorsque la portion de verrouillage 144 est reçue dans le logement 118, le verrou 140 est reçu dans le logement 118, l'axe de verrou A140 est confondu avec l'axe de verrouillage A118. Le verrou 140 est alors guidé en translation par rapport au corps principal 110, les positions de verrouillage et de déverrouillage étant deux positions axiales du verrou 140 le long de l'axe de verrouillage A118.

L'organe de rappel 150 agit selon un axe de rappel A150, qui est avantageusement parallèle à l'axe de verrouillage A118. L'axe de rappel A150 est ici situé du côté opposé de l'embouchure distale 112 par rapport à l'axe de verrouillage A118, autrement dit entre l'axe de verrouillage A118 et l'arrière du corps principal 110. Un tel agencement facilite l'assemblage de l'élément femelle 100 et permet de gagner en compacité radiale.

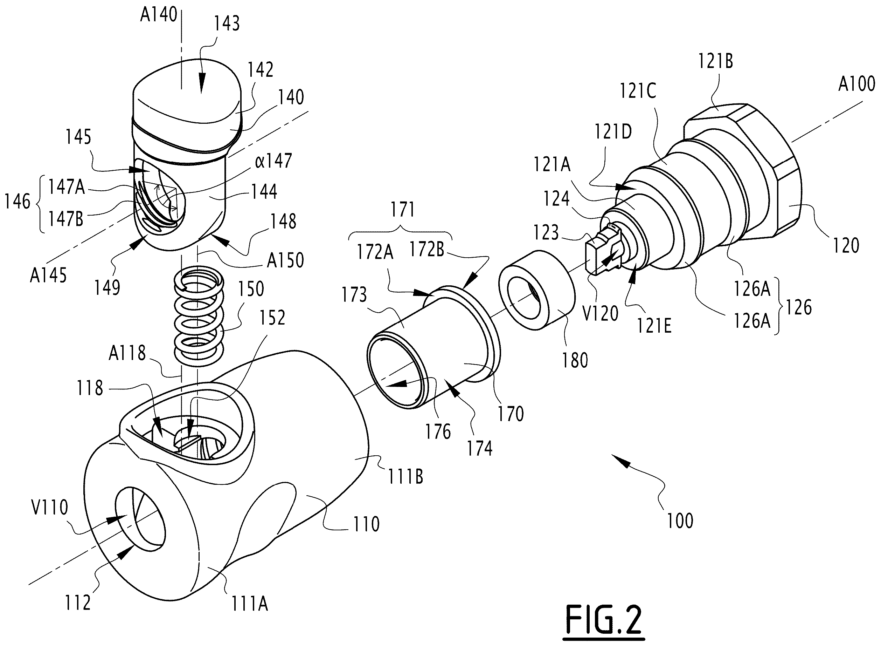

Dans le premier mode de réalisation, l'organe de rappel 150 est situé du côté de la surface d'actionnement 143 par rapport à l'axe longitudinal A100. Autrement dit la surface d'appui primaire 151 et la surface d'appui secondaire 152 sont chacune situées du côté de la surface d'actionnement 143 par rapport à l'axe longitudinal A100. La portion d'actionnement 142 du verrou 140 est avantageusement creuse et ménage un logement V142 prévu pour recevoir partiellement l'organe de rappel 150. Le logement V142 présente un fond, qui forme la surface d'appui primaire 151. La surface d'appui primaire 151 est ainsi une surface opposée de la face d'actionnement 143. La surface d'appui secondaire 152 est ici ménagée sur le corps principal 110. La surface d'appui secondaire 152 est située en regard de la surface d'appui primaire 151. La surface d'appui secondaire 152 est ici une surface ménagée dans le logement 118, comme illustré à la figure 2.

La portion de verrouillage 144 présente une ouverture 145, qui est ménagée au travers de la portion de verrouillage 144 selon un axe d'ouverture A145 orthogonal à l'axe de verrou A140. Lorsque l'élément femelle 100 est assemblé, dans une configuration d'utilisation, la portion de verrouillage 144 est reçue dans le premier passage V110, l'ouverture 145 du verrou 140 formant une portion du premier passage V110. L'axe d'ouverture A145 est alors parallèle à l'axe longitudinal A100. L'ouverture 145 du verrou 140 est apte à recevoir l'embout mâle 10, formant un anneau de passage de l'embout mâle 10. En configuration connectée du raccord fluidique R, la partie distale 14 de l'embout mâle 10 traverse le verrou 140 par l'ouverture 145 du verrou 140, la partie tubulaire 16 filetée étant partiellement reçue dans l'ouverture 145 du verrou 140.

La portion de verrouillage 144 ménage un relief de retenue 146, qui est ménagé en saille dans l'ouverture 145 du verrou 140 et qui est configurée pour coopérer avec le filetage de la partie tubulaire 16 de l'embout mâle 10 en position engagée. Le relief de retenue 146 est ici formé par une portion de taraudage présentant une forme complémentaire du filetage de la partie tubulaire 16. Lorsque le verrou 140 est en position de verrouillage et que l'embout mâle 10 est en position engagée, le relief de retenue 146 coopère avec le filetage de la partie tubulaire 16 de l'embout mâle 10, empêchant d'éloigner l'embout mâle 10 de l'élément femelle 100. Le raccord R est alors dans une configuration connectée. Lorsque l'embout mâle 10 est en position engagée mais que le verrou 140 est en position de verrouillage, le raccord R est dans la configuration engagée.

Dans l'exemple illustré, le relief de retenue 146 comprend une première dent 147A, qui reproduit une portion de taraudage complémentaire du filetage de la partie tubulaire 16 de l'embout mâle 10. La première dent 147A s'étendant avantageusement sur une portion angulaire α147, centrée sur l'axe d'ouverture A145, qui est supérieure à 30°, de préférence supérieure à 60°, par exemple égale à 60°±5°, de préférence encore égale à 90°±5°.

Par rapport à la situation décrite dans FR 2 474 639-A1, une surface de contact entre le verrou en position 140 et la partie tubulaire 16 filetée s'étend sur un secteur angulaire bien plus important, ce qui réduit la pression de contact et contribue à la fois à la bonne retenue de l'embout mâle 10 en position engagée, et à la réduction de l'usure de l'élément femelle 100.

Avantageusement, le relief de retenue 146 comprend, outre la première dent 147A, au moins une deuxième dent 147B, qui est apte à pénétrer dans le filetage de la partie tubulaire 16 de l'embout mâle conjointement à la première dent 147A. La deuxième dent 147B reproduit une portion de taraudage complémentaire du filetage de la partie tubulaire 16. La deuxième dent 147B est distante de la première dent 147A d'un pas de filet correspondant au filetage de la partie tubulaire 16 de l'embout mâle 10. La deuxième dent 147B présente une forme similaire, de préférence identique, à la première dent 147A. En particulier, la deuxième dent 147B s'étendant avantageusement sur une portion angulaire, centrée sur l'axe d'ouverture A145, qui est supérieure à 30°, de préférence supérieure à 60°, par exemple égale à 60°±5°, de préférence encore égale à 90°±5°. Dans l'exemple illustré, le relief de retenue 146 comprend les deux dents 147A/147B, qui présentent chacune une portion angulaire supérieure à 30°, de préférence supérieure à 60°, par exemple égale à 60°±5°, de préférence encore égale à 90°±5°. En variante non représentée, le relief de retenue 146 comprend trois dents ou plus, qui présentent chacune une portion angulaire supérieure à 30°, de préférence supérieure à 60°, par exemple égale à 60°±5°, de préférence encore égale à 90°±5°.

Le fait que le relief de retenue 146 comprennent plusieurs dents 147A/147B augmente la durée de vie de l'élément femelle 100. En particulier, lorsque le verrou 140 est réalisé en un matériau polymère synthétique, l'usure du relief de retenue 146 est ralentie.

De plus, comme les dents 147A/147B sont des portions de taraudage complémentaire du filetage de la partie tubulaire 16 de l'embout mâle 10, la rotation de l'élément femelle 100 autour de l'axe longitudinal A100 entraine le déplacement de l'élément femelle 100 le long de l'axe longitudinal A100 par effet de vissage ou de dévissage.

Le verrou 140 comprend aussi une face inférieure 148, qui est située en regard du fond 119 du logement 118 lorsque l'élément femelle 100 est assemblé. La face inférieure 148 est une surface opposée de la face d'actionnement 143. Le verrou 140 comprend avantageusement une surface, qui relie la face inférieure 148 à l'ouverture traversante 145 et qui forme une face de butée 149, qui est orientée vers l'embouchure distale 112 lorsque l'élément femelle 100 est assemblé.

Le verrou 140 et le corps principal 110 sont conçus de telle sorte que lorsque le verrou 140 est dans la position de verrouillage et que l'embout mâle 10 est déconnecté de l'élément femelle 100, comme illustré en figure 1, si l'utilisateur insère l'embout mâle 10 dans l'élément femelle 100 sans faire passer le verrou 140 dans la position de déverrouillage, alors la face d'extrémité 19 de l'embout mâle 10 vient en appui contre la face de butée 149, laquelle s'oppose à l'introduction de l'embout mâle 10 dans l'ouverture traversante 145 du verrou 140. Autrement dit, lorsque le verrou 140 est en position de verrouillage, l'embouchure distale 112 et l'ouverture traversante 145 sont décalées, empêchant l'introduction de l'embout mâle 10 dans l'ouverture traversante 145, tandis que lorsque le verrou 140 est en position de déverrouillage, l'embouchure distale 112 et l'ouverture traversante 145 sont alignées, autorisant l'introduction de l'embout mâle 10 dans l'ouverture traversante 145. Sans cette face de butée 149, l'opérateur pourrait introduire l'embout mâle 10 en force sans actionner le verrou 140. Le filetage de l'embout mâle 10, qui est très agressif, frotterait alors sur le relief de retenue 146 provoquant de l'usure.

L'élément femelle 100 comprend aussi une butée de verrou 170, qui est reçue dans le canal interne V100 et qui est configurée pour maintenir le verrou 140 captif dans le logement 118. La butée de verrou 170 comprend une collerette proximale 171, qui présente ici une forme d'anneau centré sur l'axe longitudinal A100, la collerette proximale 171 comprend une face distale 172A, qui est située en regard de la paroi de butée 117D du corps principal 110 et par laquelle la butée de verrou 170 est en appui axial contre la paroi de butée 117D du corps principal 110, et une face proximale 172B, qui est située en regard de la face distale 121D de l'adaptateur 120 et par laquelle la butée de verrou 170 est en appui axial contre la face distale 121D.

La butée de verrou 170 comprend aussi une partie distale annulaire 173, qui s'étend en saille depuis la collerette proximale 171, la partie distale annulaire 173 présentant ici une forme de cylindre allongé, s'étendant selon l'axe longitudinal A100 et avec une section circulaire. La partie distale annulaire 173 présente une surface de guidage externe 174, qui coopère avec la troisième portion cylindrique 117C du corps principal 110, notamment par complémentarité de formes, de sorte que la partie distale annulaire 173 est guidée dans le corps principal 110 et s'étend, selon l'axe longitudinal A100, dans le logement 118 et dans l'ouverture 145 du verrou 140. La partie distale annulaire 173 coopère avec la portion de verrouillage 144 de manière à autoriser les mouvements du verrou 140 entre la position de verrouillage et la position de déverrouillage, tout en empêchant les mouvements au-delà de la position de verrouillage. Ainsi la butée de verrou 170 est apte à stopper la translation du verrou 140 dans sa position de verrouillage. La butée de verrou 170 est en appui axial contre la paroi de butée 117D du corps principal 110 et centrée dans la troisième partie cylindrique 117C du corps principal 110.

La partie distale annulaire 173 ménage un alésage intérieur 176, qui entoure le poussoir 123 et qui est prévue pour recevoir la partie tubulaire 16 de l'embout mâle 10 en position engagée. La partie distale annulaire 173 s'étend, suivant l'axe longitudinal A100, au-delà de l'axe de verrou A140. L'alésage intérieur 176 présente un diamètre qui est légèrement supérieur à un diamètre externe de la partie tubulaire 16 de l'embout mâle 10. Par légèrement supérieur, on entend que l'alésage intérieur 176 est configuré pour recevoir la partie tubulaire 16 avec un jeu dimensionnel réduit, de manière à guider la partie tubulaire 16 lors de l'insertion dans l'alésage 176. Typiquement, un jeu dimensionnel compris entre 0,1 mm et 0,5 mm est prévu

L'élément femelle 100 comprend aussi un joint annulaire 180. Le joint annulaire 180 présente ici une forme de révolution autour de l'axe longitudinal A100 avec une section globalement rectangulaire dans un plan contenant l'axe longitudinal A100. Le joint annulaire 180 est agencé autour du poussoir 123, en appui contre la surface axiale 121E de l'adaptateur 120. Avantageusement, des ergots 124 sont ménagés en saillie sur le poussoir 123, tandis que le joint annulaire 180 présente un renflement intérieur 181, qui coopère avec les ergots 124 de manière à maintenir le joint annulaire 180 en position autour du poussoir 123.

Le joint annulaire 180 est ainsi placé entre l'alésage intérieur 176 de la butée de verrou 170 et une surface extérieure du poussoir 123. Le joint annulaire 180 est configuré pour coopérer, notamment par complémentarité de formes, avec la portion tubulaire 16 de l'embout mâle 10 en position engagée, de manière à assurer une étanchéité entre l'embout mâle 10 et l'adaptateur 120. Plus précisément, lorsque l'embout mâle 10 est en position engagée, le joint annulaire 180 est comprimé entre la face d'extrémité 19 de l'embout mâle 10 et la surface axiale 121E de l'adaptateur 120, assurant l'étanchéité entre l'embout mâle 10 et l'adaptateur 120.

On décrit à présent un exemple d'assemblage de l'élément femelle 100.

L'assemblage de l'élément femelle 100 comporte les étapes suivantes :
- Disposer l'organe de rappel 150, ici le ressort de verrou, dans le logement V142 ménagé dans le verrou 140,
- Ensuite, mettre en place le verrou 140 dans le logement 118 ménagé dans le corps principal 110 et comprimer l'organe de rappel 150, de manière que le verrou 140 dans une position intermédiaire entre la position de verrouillage et la position de déverrouillage,

- Tout en maintenant l'organe de rappel 150 comprimé, insérer la butée de verrou 170 en passant par la portion proximale 111B du corps principal 110, de manière à ce que la partie distale annulaire 173 s'étend, selon l'axe longitudinal A100, dans l'ouverture 145 du verrou 140, empêchant les mouvements au-delà de la position de verrouillage.
- Ensuite, mettre en place le joint annulaire 180 autour du poussoir 123 de l'adaptateur 120,
- Ensuite, assembler l'adaptateur 120 au corps principal 110, en insérant le poussoir 123 par la portion proximale 111B du corps principal en mettant en œuvre les moyens d'assemblage 126, c'est-à-dire ici jusqu'à ce que les collerettes 126A soient reçues dans les rainures internes 116A.

On décrit à présent un exemple d'une séquence d'accouplement de l'élément femelle 100 à l'embout mâle 10.

De préférence, l'embout mâle 10 et l'élément femelle 100 sont initialement dans la configuration de la figure 1. Pour accoupler l'élément femelle 100 et l'embout mâle 10, il suffit à l'utilisateur de presser la surface d'actionnement 143 du verrou 140 pour amener le verrou 140 en position de déverrouillage, d'aligner l'axe longitudinal A100 de l'élément femelle 100 avec l'axe principal A10 de l'embout mâle 10, puis de rapprocher l'élément femelle 100 de l'embout mâle 10.

Au cours du rapprochement, la partie distale 14 de l'embout mâle 10 franchit l'embouchure distale 112 du corps principal 110 et atteint l'alésage intérieur 176 de la butée de verrou 170. L'embout mâle 10 est alors doublement guidé, d'une part par l'embouchure distale 112 du corps principal 110, et d'autre part par la butée de verrou 170. La face d'extrémité 19 de l'embout mâle 10 atteint ensuite le joint annulaire 180 et comprime le joint annulaire 180 contre la surface axiale 121E. Le poussoir 123 repousse l'épingle 22 de l'embout mâle 10, autorisant la circulation du fluide entre l'élément femelle 100 et l'embout mâle 10, sans aucune fuite. Le raccord fluidique R est alors dans la configuration engagée, comme illustré à la figure 3.

En relâchant le verrou 140, le verrou 140 se déplace vers la position de verrouillage, les reliefs de retenue 146 se rapprochant de puis coopérant avec la surface externe de la partie tubulaire 16 filetée, empêchant d'éloigner l'embout mâle 10 de l'élément femelle 100. La connexion entre l'embout mâle 10 de l'élément femelle 100 est ainsi verrouillée. Le raccord R est alors dans la configuration connectée. Au besoin, l'embout mâle 10 peut être déplacé en rotation par rapport à l'élément femelle 100 autour de l'axe longitudinal A100, en particulier selon un mouvement de vissage, de manière à comprimer le joint annulaire 180 et à supprimer d'éventuelles fuites.

On décrit à présent un exemple d'une séquence de désaccouplement de l'élément femelle 100 à l'embout mâle 10.

Le raccord R étant initialement dans la configuration connectée, dans un premier temps l'utilisateur actionne le verrou 140 en appuyant sur la surface d'actionnement 143, déplaçant le verrou 140 vers la position de déverrouillage. Les reliefs de retenue 146 sont alors dégagés des filets de la partie tubulaire 16 de l'embout mâle 10 et n'empêche plus d'éloigner l'embout mâle 10 de l'élément femelle 100. Comme la face d'extrémité 19 de l'embout mâle 10 comprime le joint annulaire 180, l'embout mâle 10 et l'élément femelle 100 s'écartent l'un de l'autre jusqu'à ce que l'étanchéité soit rompue. Si le fluide est sous pression, le fluide va se propager dans le logement 118 et agir sur le verrou 140 pour le ramener dans sa position de verrouillage car le logement 118 est borgne. Ceci constitue une sécurité qui évite le phénomène de coup de fouet résultant de la décompression subite de la conduite connectée à l'élément femelle 100.

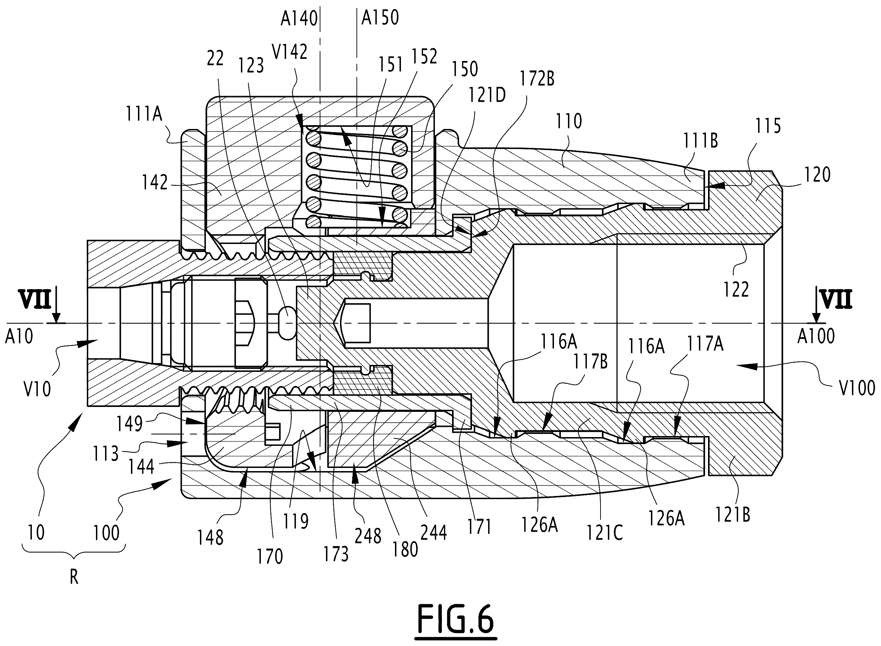

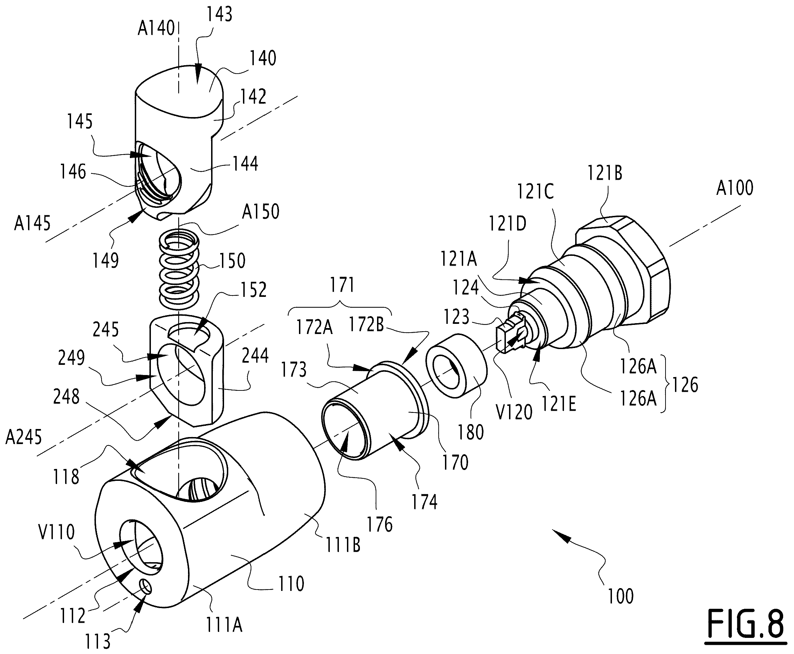

Des modes de réalisation alternatifs de l'invention sont illustrés aux figures 6 à 13. Dans les modes de réalisation alternatifs de l'invention, les éléments analogues à ceux des autres modes de réalisation portent les mêmes références et fonctionnent de la même façon. Dans ce qui suit, on décrit principalement les différences entre chaque mode de réalisation et le ou les précédents. En relation avec les modes alternatifs de l'invention, si une référence est mentionnée dans la description sans être portée sur une figure, ou bien si cette référence est portée sur une figure sans être mentionnée dans la description, cette référence désigne le même élément que celui portant la même référence dans le premier mode de réalisation.

Un deuxième mode de réalisation de l'invention est représenté aux figures 6 à 8. Une des principales différences du deuxième mode de réalisation avec le mode de réalisation précédent est que le logement 118 ménagé dans le corps principal 110 est cylindrique à section circulaire, tandis que l'élément femelle 100 comprend un support 244, qui est prévu pour supporter l'organe de rappel 150. Le support 244 est reçu dans le logement 118 du corps principal 110 conjointement à la portion de verrouillage 144 et ménage la surface d'appui secondaire 152. Comme dans le premier mode de réalisation, la portion d'actionnement 142 du verrou 140 est creuse et ménage la surface d'appui primaire 151.

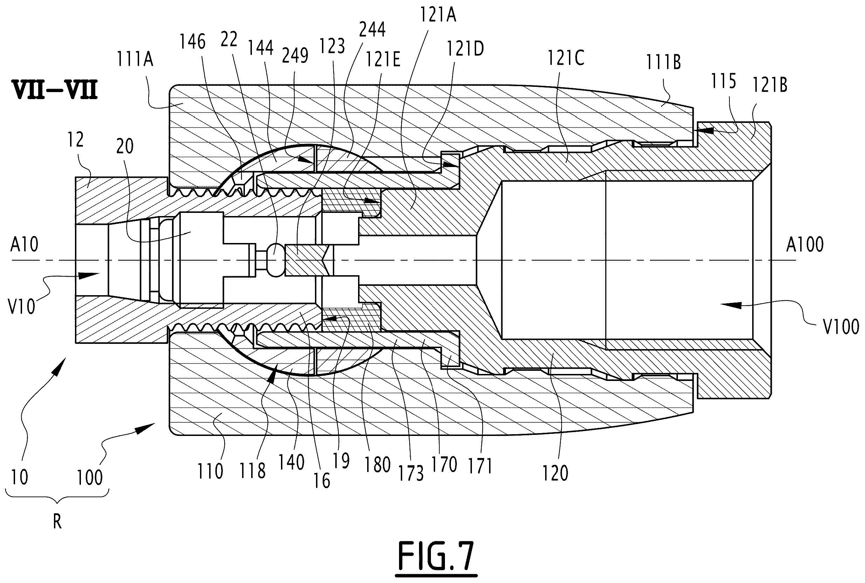

Dans l'exemple illustré, le support 244 présente une forme globalement cylindrique s'étendant selon un axe parallèle à l'axe de verrou A140. Le support 244 présente une section en portion de cercle, qui est complémentaire de la portion de verrouillage 144 du verrou 140, comme illustré en coupe à la figure 7. Le corps principal 110 de l'élément femelle 100 présente ainsi des formes simples, faciles à usiner avec des moyens classiques. Il est ainsi possible de produire le corps principal 110 en métal, pour plus de durabilité, à des coûts de fabrication réduits.

Le support 244 présente une ouverture secondaire 245, qui est ménagée au travers du support 244 selon un axe secondaire A245, l'axe secondaire A245 étant parallèle à l'axe d'ouverture A145 du verrou 140 lorsque l'élément femelle 100 est assemblé. L'ouverture secondaire 245 est prévue pour être traversée par la partie distale annulaire 173 de la butée de verrou 170. En configuration assemblée de l'élément femelle 100, le support 244 est reçu dans le logement 118 du corps principal 110, le support 244 étant traversé par la partie distale annulaire 173, laquelle s'étend, par-delà l'ouverture secondaire 245, dans l'ouverture traversante 145 du verrou 140, de manière à empêcher les mouvements du verrou 140 au-delà de la position de verrouillage.

Le support 244 comprend aussi une face inférieure 248, qui est située en regard du fond 119 du logement 118 lorsque l'élément femelle 100 est assemblé. La face inférieure 248 est une surface opposée de la surface d'appui secondaire 152.

Le support 244 est solidaire du corps principal 110 par l'intermédiaire de la butée de verrou 170. Le support 244 ménage avantageusement une face avant 249, qui s'étend selon un plan orthogonal à l'axe secondaire A245 et qui est prévue pour guider la portion de verrouillage 144 lors des mouvements entre la position de verrouillage et la position de déverrouillage.

Le deuxième mode de réalisation de l'invention diffère également du premier mode de réalisation en ce que le logement 118 de verrou communique avec l'extérieur du corps principal 110 par un trou 113 supplémentaire, qui est ménagé au travers du corps principal 110 et qui est situé sur une face distale du corps principal 110 à l'opposé, par rapport à l'axe principal A100, de la surface d'actionnement 143 du verrou 140. Dans le deuxième mode de réalisation, le trou 113 débouche sur une face distale du corps principal 110. Grâce à ce trou 113, lors de la déconnexion et plus particulièrement lorsque le fluide sous pression se propage dans le logement 118, son action sur le verrou 140 pour le ramener dans sa position de verrouillage est limitée. Ceci évite à l'opérateur de devoir actionner le verrou 140 plusieurs fois pour pouvoir déconnecter l'embout mâle 10 de l'élément femelle 100.

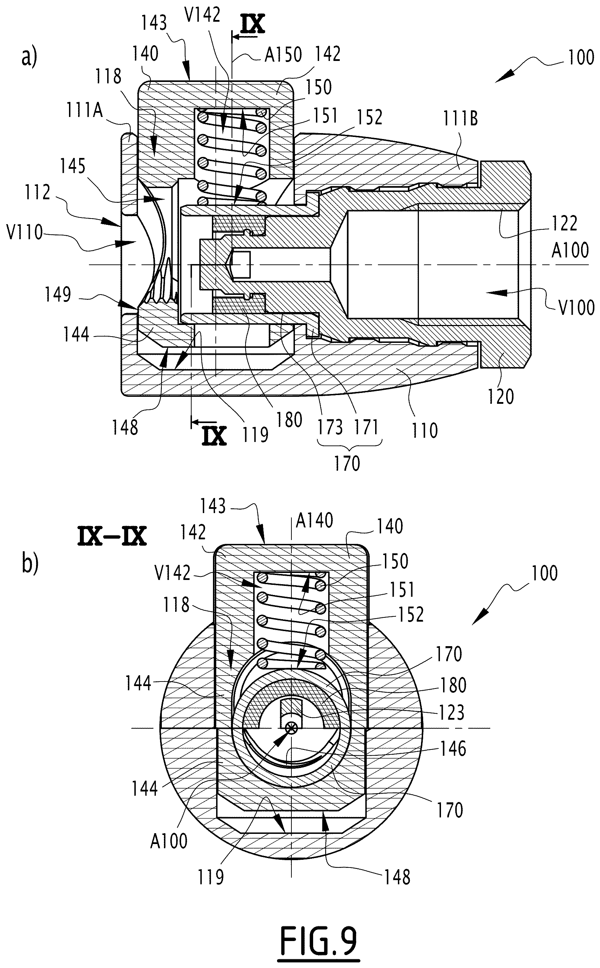

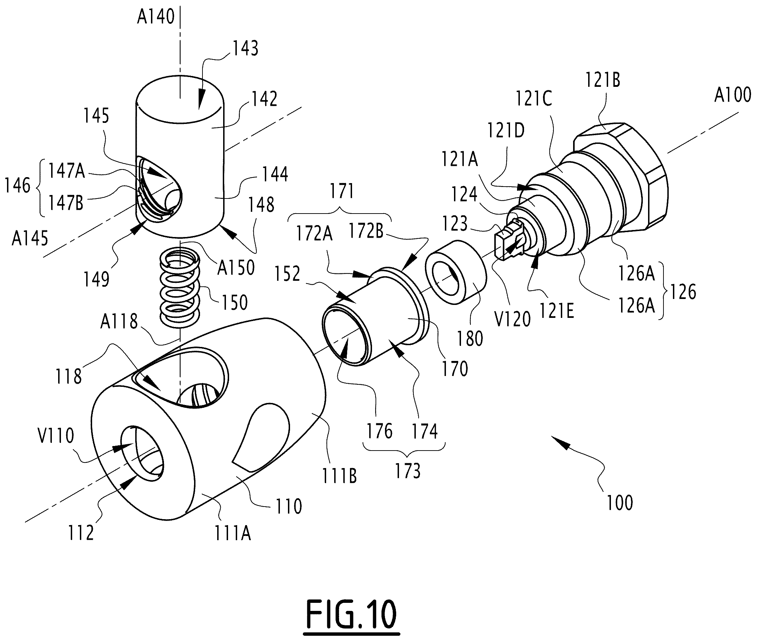

Un troisième mode de réalisation de l'invention est représenté aux figures 9 et 10.

Comme dans les modes de réalisation précédents, la portion d'actionnement 142 du verrou 140 est creuse et ménage la surface d'appui primaire 151. Une des principales différences du troisième mode de réalisation avec les modes de réalisation précédents est que la surface d'appui secondaire 152 est ici directement formée par la butée de verrou 170, comme illustré en figure 9.

Le verrou 140, et en particulier la portion de verrouillage 144, présente ici une section circulaire, le logement 118 présentant lui-aussi une section circulaire, facile à usiner.

L'ouverture traversante 145 débouche, du côté proximal du verrou 140, par un trou oblong, par lequel pénètre la partie distale annulaire 173 de la butée de verrou 170. Ainsi la butée de verrou 170 empêche les mouvements de rotation du verrou 140 par rapport au corps principal 110 autour de l'axe de verrouillage A118, tout en autorisant les mouvements entre la position de verrouillage et la position de déverrouillage.

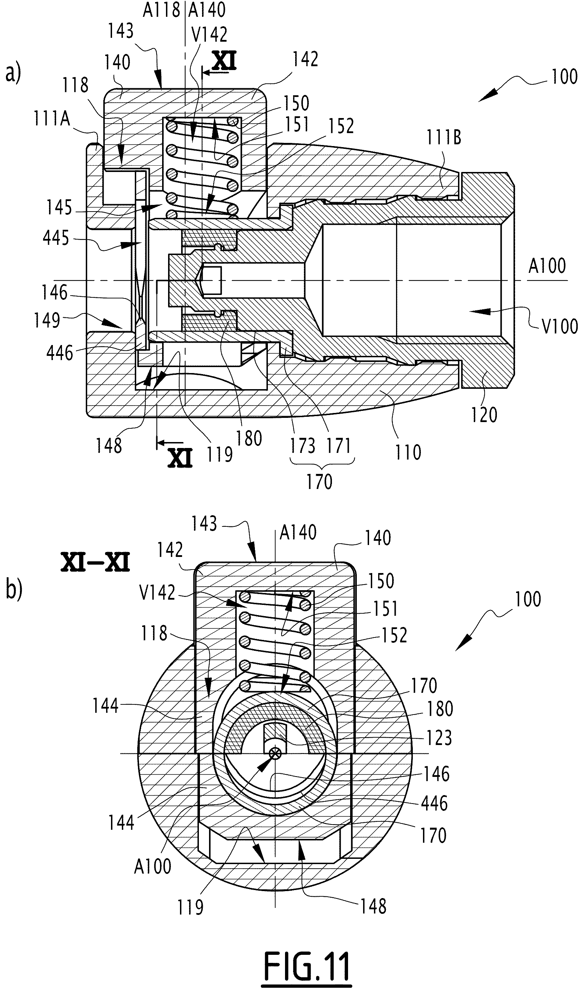

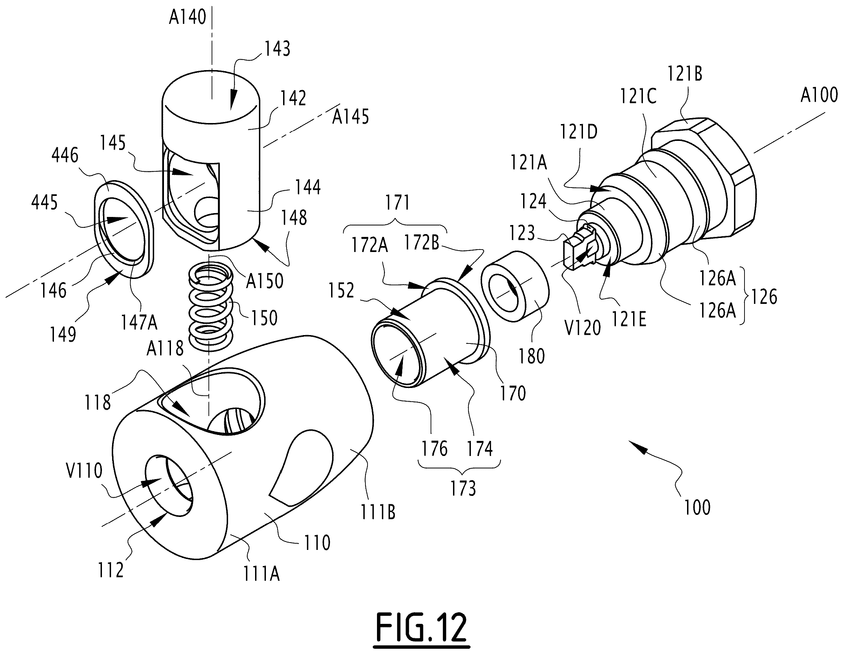

Un quatrième mode de réalisation de l'invention est représenté aux figures 11 et 12. Comme dans le troisième mode de réalisation, la surface d'appui secondaire 152 est directement ménagée sur la butée de verrou 170.

Une des principales différences du quatrième mode de réalisation avec les autres modes de réalisation est que le verrou 140 comprend un insert 446, qui est réalisé en métal et qui ménage le relief de retenue 146. L'insert 446 est de préférence réalisé en acier. L'insert 446 est solidaire du verrou 140, en particulier est assemblé à la portion de verrouillage 144 du verrou 140, de sorte que l'insert 446 est déplacé avec le reste du verrou 140 entre la position de verrouillage et la position de déverrouillage.

L'insert 446 est ici fabriqué dans une plaque, qui ménage un anneau 445 de passage de l'embout mâle 10, l'anneau de passage 445 formant une portion de l'ouverture traversante 145 du verrou lorsque l'insert métallique 446 est assemblé au reste du verrou 140. L'insert 446 comprend ici seulement la première dent 147A, qui est apte à pénétrer dans le filetage de la partie distale 14 de l'embout mâle 10 et qui forme le relief de retenue 146. Cette construction permet d'utiliser une dent métallique plus résistante à l'usure, tout en gardant le reste du verrou 140 réalisé en matière plastique, c'est-à-dire plus léger et plus économique à fabriquer en grande série. L'insert 446 ménage aussi la face de butée 149, qui est elle-aussi résistante à l'usure. En variante non représentée, l'insert 446 comprend plusieurs dents, qui forment le relief de retenue 146. Par exemple, l'insert est réalisé dans une plaque plus épaisse.

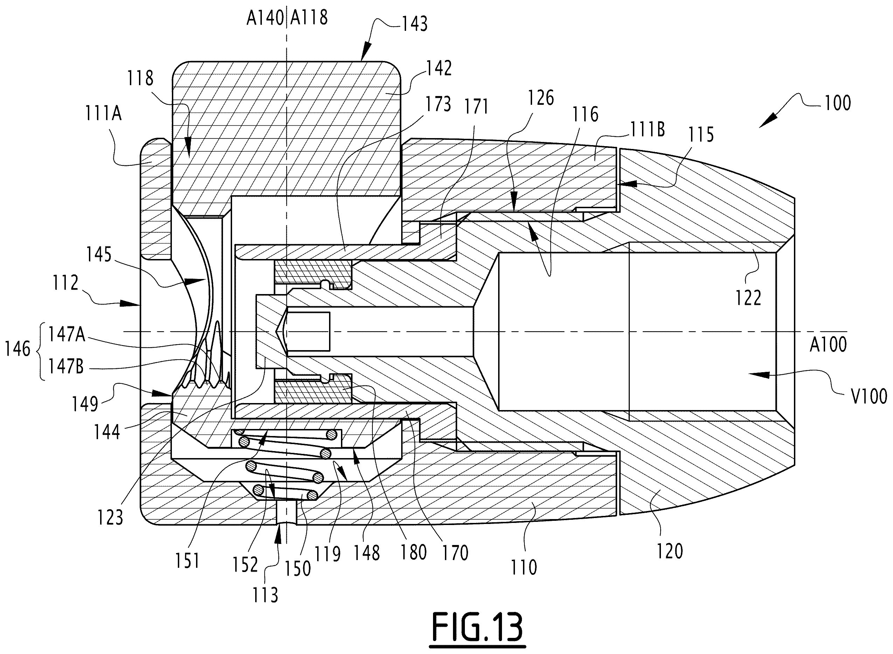

Un cinquième mode de réalisation de l'invention est représenté à la figure 13. Une des principales différences du cinquième mode de réalisation avec les modes de réalisation précédents est que l'organe de rappel 150 placé à l'opposé de la surface d'actionnement 143 du verrou 140 par rapport à l'axe longitudinal A100.

Autrement dit, la surface d'appui primaire 151 n'est pas ménagés dans une cavité de la portion d'actionnement 142, mais dans la face inférieure 148 du verrou 140, tandis que la face d'appui secondaire 152 est ménagée dans le fond 119 du logement 118.

En outre, l'adaptateur 120 est avantageusement assemblé au corps principal 110 par vissage. Autrement dit, les moyens d'assemblage 126 sont ici formés par un filetage ménagé sur le côté externe de la partie intermédiaire 121C, tandis que les moyens d'assemblage complémentaires 116 sont formés par un taraudage, qui est ménagé dans l'alésage 114.

L'élément femelle 100 est ainsi démontable, par exemple pour nettoyer l'élément femelle 100 et/ou remplacer le joint annulaire 180.

Dans le cinquième mode de réalisation, le logement 118 de verrou n'est pas borgne mais communique avec l'extérieur du corps principal 110 par l'intermédiaire du trou 113, qui est ici ménagé dans le fond 119 du logement 118 du corps principal 110. Le trou 113 est ici situé à l'opposé, par rapport à l'axe principal A100, de la surface d'actionnement 143 du verrou 140. Grâce au trou 113, lors de la déconnexion du raccord fluidique R, et plus particulièrement lorsque le fluide sous pression se propage dans le logement 118, l'action du fluide sous pression sur le verrou 140, tendant à ramener le verrou 140 dans la position de verrouillage, est limitée. Ceci évite à l'opérateur de devoir actionner le verrou 140 plusieurs fois pour pouvoir déconnecter l'embout mâle 10 de l'élément femelle 100.

Les modes de réalisation et les variantes mentionnées ci-dessus peuvent être combinés entre eux pour générer de nouveaux modes de réalisation de l'invention telle que définie par les revendications.

## Revendications

1. Élément femelle (100) de raccord fluidique (R), l'élément femelle (100) étant prévu pour être connecté à un embout mâle (10) de type Schrader, l'embout mâle (10) comprenant une partie tubulaire (16) avec un filetage et logeant une valve (20) avec une épingle (22) d'ouverture de la valve, l'élément femelle (100) comprenant :
- un corps principal (110), qui ménage un premier passage (V110) s'étendant selon un axe longitudinal (A100), le corps principal (110) comprenant une portion distale (111A) et une portion proximale (111B), qui sont alignées selon l'axe longitudinal (A100), le premier passage (V110) débouchant de la portion distale (111A) par une embouchure distale (112), le corps principal (110) étant configuré pour recevoir l'embout mâle (10) dans le premier passage (V110) en passant par l'embouchure distale (112), l'embout mâle (10) étant dans une position engagée par rapport à l'élément femelle (100),
la portion distale (111A) ménageant un logement (118), qui s'étend de l'extérieur du corps principal (110) selon un axe de verrouillage (A118) radial à l'axe longitudinal (A100) et qui débouche dans le premier passage (V110),
- un adaptateur (120), qui est traversé par un deuxième passage (V120) et qui comprend :
• une partie proximale (121B), de laquelle débouche le deuxième passage (V120) et qui comprend des moyens de solidarisation (122), qui sont prévus pour la connexion fluidique de l'adaptateur (120) à une canalisation,
• une partie intermédiaire (121C), qui comprend des moyens d'assemblage (126), par lesquels l'adaptateur (120) est apte à être assemblé à la portion proximale (111B) du corps principal (110), dans une configuration assemblée de l'élément femelle (100),
• une partie distale (121A), qui ménage un poussoir (123), le poussoir (123) s'étendant, dans le premier passage (V110), depuis la partie intermédiaire (121C) en direction de l'embouchure distale (112) lorsque l'élément femelle (100) est en configuration assemblée, le deuxième passage (V120) débouchant du poussoir (123), de sorte que lorsque l'adaptateur (120) est assemblé au corps principal (110), le premier passage (V110) et le deuxième passage (V120) forment ensemble un canal interne (V100) de l'élément femelle (100), le poussoir (123) étant apte à repousser l'épingle (22) de l'embout mâle (10) lors de la connexion de l'embout mâle (10) à l'élément femelle (100),
- un verrou (140), qui est assemblé à la portion distale (111A) et qui comprend :
• une portion de verrouillage (144), qui est reçue dans le premier passage (V110) et dans laquelle est ménagée une ouverture (145), qui s'étend selon un axe d'ouverture (A145) et qui délimite un anneau de passage de l'embout mâle (10) en position engagée,
• un relief de retenue (146), qui s'étend en saillie dans l'ouverture (145) et qui est apte à pénétrer dans le filetage de l'embout mâle (10),
• une surface d'actionnement (143) opposée au relief de retenue (146) par rapport à l'axe d'ouverture (A145),
le verrou (140) étant reçu dans le logement (118) et étant mobile en translation par rapport au corps principal (110) suivant l'axe de verrouillage (A118), entre :
• une position de verrouillage, dans laquelle, lorsque l'embout mâle (10) est reçu dans l'embouchure distale (112) en position engagée, le relief de retenue (146) pénètre dans le filetage de l'embout mâle (10) de manière à maintenir l'embout mâle (10) en position engagée, et
• une position de déverrouillage, dans laquelle le relief de retenue (146) libère le filetage de l'embout mâle (10) et ne s'oppose pas au retrait de l'embout mâle (10) du corps principal (110),
- un organe de rappel (150), qui est configuré pour ramener le verrou de sa position de déverrouillage vers sa position de verrouillage,
- un joint annulaire (180), qui est agencé autour du poussoir (123) en appui contre une surface axiale (121E) de l'adaptateur (120), la surface axiale (121E) étant orientée vers l'embouchure distale (112) et étant portée par un plan perpendiculaire à l'axe longitudinal (A100), le joint annulaire (180) étant configuré pour coopérer avec la partie tubulaire (16) de l'embout mâle (10) en position engagée de manière à assurer une étanchéité entre l'embout mâle (10) et l'adaptateur (120),
dans lequel :
- l'élément femelle (100) comprend aussi une butée de verrou (170), la butée de verrou comprenant :
• une partie distale annulaire (173), qui est guidée dans le corps principal (110) et qui s'étend, selon l'axe longitudinal (A100), dans le logement (118) du corps principal (110) et dans l'ouverture (145) du verrou (140), la partie distale annulaire (173) coopérant avec la portion de verrouillage (144) de manière à autoriser les mouvements du verrou (140) entre la position de verrouillage et la position de déverrouillage, tout en empêchant les mouvements au-delà de la position de verrouillage et,
• un alésage intérieur (176), qui entoure le poussoir (123) et qui est prévu pour recevoir la partie tubulaire (16) de l'embout mâle (10),
- le joint annulaire (180) est placé entre l'alésage intérieur (176) de la butée de verrou (170) et le poussoir (123).

2. Élément femelle (100) selon la revendication 1, dans lequel :
- la partie distale annulaire (173) de la butée de verrou (170) s'étend, selon l'axe longitudinal (A100), au-delà de l'axe de verrou (A140),
- un diamètre de l'alésage intérieur (176) de la partie distale annulaire (173) est légèrement supérieur à un diamètre externe de la partie tubulaire (16) de l'embout mâle (10).

3. Élément femelle (100) selon l'une quelconque des revendications 1 ou 2, dans lequel :
- le verrou (140) ménage une surface d'actionnement (143), qui est accessible depuis l'extérieur de l'élément femelle (100) et qui est prévue pour qu'un utilisateur déplace le verrou (140) de la position de verrouillage vers la position de déverrouillage, à l'encontre de l'organe de rappel (150),
- le logement (118) de verrou communique avec l'extérieur du corps principal (110) par un trou (113) supplémentaire, qui est ménagé au travers du corps principal (110) et qui est situé à l'opposé de la surface d'actionnement (143) par rapport à l'axe principal (A100).

4. Élément femelle (100) selon l'une quelconque des revendications 1 à 3 , dans lequel :
- le relief de retenue (146) comprend une première dent (147A), qui reproduit une portion de taraudage complémentaire du filetage de la partie tubulaire (16) de l'embout mâle (10), la première dent (147A) s'étendant sur une portion angulaire (α147) supérieure à 60° centrée sur l'axe d'ouverture (A145).

5. Élément femelle (100) selon la revendication 4, dans lequel :
- le relief de retenue (146) comprend, outre la première dent (147A), au moins une deuxième dent (147B), qui est apte à pénétrer dans le filetage de la partie tubulaire (16) de l'embout mâle (10) conjointement à la première dent (147A),
- chaque deuxième dent (147B) reproduit une portion de taraudage complémentaire du filetage de la partie tubulaire (16), s'étend sur une portion angulaire supérieure à 60° centrée sur l'axe d'ouverture (A145).

6. Élément femelle (100) selon l'une quelconque des revendications 1 à 5, dans lequel :
- l'organe de rappel (150) est situé du côté de la surface d'actionnement (143) par rapport à l'axe longitudinal (A100) et agit suivant un axe de rappel (A150), qui est parallèle à l'axe de verrouillage (A118) et qui est situé entre l'axe de verrouillage (A118) et l'arrière du corps principal (110).

7. Élément femelle (100) selon l'une quelconque des revendications 1 à 6, dans lequel :
- le verrou (140) ménage une surface d'appui primaire (151), qui s'étend globalement selon un plan orthogonal à l'axe de verrouillage (A118),
- le corps principal (110) ménage une surface d'appui secondaire (152), qui est située en regard de la surface d'appui primaire (151),
- l'organe de rappel (150) agit entre la surface d'appui primaire (151) du verrou (140) et la surface d'appui secondaire (152).

8. Élément femelle (100) selon la revendication 6, dans lequel :
- le verrou (140) ménage une surface d'appui primaire (151), qui s'étend globalement selon un plan orthogonal à l'axe de verrouillage (A118),
- l'élément femelle (100) comprend un support (244), qui est reçu dans le logement (118) du corps principal (110), le support (244) étant traversé par la partie distale annulaire (173) de la butée de verrou (170),
- le support (244) ménage une surface d'appui secondaire (152), qui est située en regard de la surface d'appui primaire (151),
- l'organe de rappel (150) agit entre la surface d'appui primaire (151) du verrou (140) et la surface d'appui secondaire (152).

9. Élément femelle (100) selon la revendication 6, dans lequel :
- le verrou (140) ménage une surface d'appui primaire (151), qui s'étend globalement selon un plan orthogonal à l'axe de verrouillage (A118),
- la butée de verrou (170) ménage une surface d'appui secondaire (152), qui est située en regard de la surface d'appui primaire (151),
- l'organe de rappel (150) agit entre la surface d'appui primaire (151) du verrou (140) et la surface d'appui secondaire (152).

10. Élément femelle (100) selon l'une quelconque des revendications 1 à 9, dans lequel :
- le verrou (140) comprend un insert (446), qui est réalisé en métal et qui, lorsque l'élément femelle (100) est en configuration assemblée, est solidaire du reste du verrou (140) et est agencé du côté de l'embouchure distale (112),
- l'insert (446) ménage un anneau (445) de passage de l'embout mâle (10), l'anneau de passage formant une portion de l'ouverture (145) du verrou,
- l'insert (446) ménage le relief de retenue (146).

11. Élément femelle (100) selon l'une quelconque des revendications 1 à 10, dans lequel :
- le verrou (140) présente une face de butée (149), qui est orientée vers l'embouchure distale (112) et qui est axialement alignée avec l'alésage intérieur (176) de la butée de verrou (170) lorsque le verrou (140) est en position de verrouillage,
- le verrou (140) et le corps principal (110) sont conçus de telle sorte que lorsque le verrou (140) est dans sa position de verrouillage et que l'embout mâle (10) est déconnecté de l'élément femelle (100), la face de butée (149) s'oppose à l'introduction de l'embout mâle (10) dans l'ouverture traversante (145) du verrou (140).

12. Raccord fluidique (R), comprenant :
- un exemplaire de l'élément femelle (100) selon l'une quelconque des revendications 1 à 11, et
- un embout mâle (10) de type Schrader, l'embout mâle (10) comprenant une partie tubulaire (16) avec un filetage et logeant une valve (20) avec une épingle (22) d'ouverture de la valve,
dans lequel l'embout mâle (10) est reçu en position engagée dans le canal interne (V100) de l'élément femelle (100).
